# EUROPEAN PATENT SPECIFICATION

(11) **EP 2 830 384 B1**
(45) Date of publication and mention of the grant of the patent: **24.07.2019**
(21) Application number: 13763972.0
(22) Date of filing: 14.03.2013
(51) Int. Cl.: H04W 72/08, H04L 5/00, H04L 27/26

(54) **METHOD FOR GENERATING DMRS SEQUENCE, METHOD FOR TRANSMITTING DMRS SEQUENCE INITIAL VALUE, TERMINAL AND BASE STATION**
VERFAHREN ZUR ERZEUGUNG EINER DMRS-SEQUENZ, VERFAHREN ZUR ÜBERTRAGUNG DES ANFANGSWERTES EINER DMRS-SEQUENZ , ENDGERÄT UND BASISSTATION
PROCÉDÉ DE GÉNÉRATION DE SÉQUENCE DMRS, PROCÉDÉ DE TRANSMISSION DE VALEUR INITIALE DE SÉQUENCE DMRS, TERMINAL ET STATION DE BASE

(30) Priority: 21.03.2012 CN 201210076861
(43) Date of publication of application: 28.01.2015
(73) Proprietor: China Mobile Communications Corporation, Beijing 100032 (CN)
(72) Inventor: SHI, Zhihua, Beijing 100032 (CN); HAN, Lu, Beijing 100032 (CN); HU, Lijie, Beijing 100032 (CN); WANG, Rui, Beijing 100032 (CN); LIU, Guangyi, Beijing 100032 (CN)
(74) Representative: Studio Torta S.p.A.
(86) International application number: PCT/CN2013/072613
(87) International publication number: WO 2013/139225

(56) References cited:
- EP-A1- 2 827 663
- CN-A- 101 882 980
- HUAWEI ET AL: "DMRS sequences for ePDCCH", 3GPP DRAFT; R1-120870, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 13 February 2012 (2012-02-13), XP050563409,
- HUAWEI ET AL.: 'DMRS sequences for ePDCCH' 3GPP TSG RANWG1 MEETING #68 06 February 2012, DRESDEN, GERMANY, XP050562632 Retrieved from the Internet: <URL:URL:http://www.3gpp. org/ftp/tsg ran/WG1 RLI/TSGR1 68>

## Description

The present invention claims a priority of the Chinese patent application No. 201210076861.9, filed on March 21, 2012 and entitled "METHOD FOR GENERATING DMRS SEQUENCES, METHOD FOR TRANSMITTING DMRS SEQUENCE INITIAL VALUES, TERMINAL AND BASE STATION".

### FIELD OF THE INVENTION

The present disclosure relates to the field of communication technology, in particular to a method for generating DMRS sequences, a method for transmitting DMRS sequence initial values, a terminal and a base station.

### DESCRIPTION OF THE PRIOR ART

In an LTE Rel-10 protocol, there are at most eight ports for a demodulation reference signal (DMRS) for demodulation of data. According to the definition of the DMRS sequence in the Rel-10 version, the DMRS sequence corresponding to users within each cell include at most two different sequences. When multi-user multiple-input multiple-output (MU-MIMO) is adopted by a system, it can at most support four single-stream users or two dual-stream users.

Currently, in the discussion of a Rel-11 CoMP issue, such a consensus that a system may configure different initial values for UEs has been reached, so that the users within each cell may adopt various sequences.

In the current Rel-11 standardization process, the discussion suggests that an enhanced physical downlink control channel (E-PDCCH) may also use DMRS for demodulation. Hence, DMRS is required to demodulate a data channel and the E-PDCCH. In the E-PDCCH, a non-precoding or precoding scheme may also be supported, and at this time, such a circumstance that several UEs share the same DMRS, i.e., the same DMRS pattern, port and DRMS sequence, will occur.

In the prior art, when the E-PDCCH and a physical downlink shared channel (PDSCH) of the same user are demodulated on the basis of the DMRS, the same DMRS sequence will be used, which will result in a limited application in some scenarios or adversely affect system performance.

For example, the system is configured in a HetNet scenario so as to enable all of, or a part of, the users to transmit a control signal using the E-PDCCH. At this time, if there are multiple users within a macro cell, a pico station is required to facilitate the data transmission. Control information of some UEs may be transmitted through the E-PDCCH from a macro station, while the PDSCH is transmitted from the pico station. It is assumed that an E-PDCCH of UE1 is transmitted from the macro station; an E-PDCCH and a PDSCH of UE2 are transmitted from the macro station; an E-PDCCH/PDCCH and a PDSCH of UE3 are transmitted from the pico station. If the E-PDCCHs of UE1 and UE2 are transmitted in a MU-MIMO manner, the DMRS sequences from UE1 and UE are required to be identical to each other so as to obtain orthogonal ports. Meanwhile, if the data from UE1 and UE3 are transmitted in a MU-MIMO manner, the DMRS sequences therefrom are also required to be identical to each other so as to obtain the orthogonal ports. At this time, if the E-PDCCH and PDSCH adopt the same DMRS sequence, the DMRS ports between at least one set of the users cannot be orthogonal to each other. As a result, serious interference will be caused and the system performance will be adversely affected. Document "DMRS sequences for ePDCCH", 3GPP DRAFT; R1-120870, 3RD GENERATION PARTNERSHIP PROJECT, vol. RAN WG1, no. Dresden, Germany; 20120206-20160210, 13 February 2012, discloses basic principle of ePDCCH design to allow UE to perform an efficient detection of allocated associated ePDCCH time-frequency resources. EP2827663 discloses a method for transmitting a downlink control signal, a base station and a user equipment. However, the above stated problem is not solved.

### SUMMARY OF THE INVENTION

An object of the present disclosure is to reduce system interference and improve scheduling flexibility of a system.

In one aspect, the present disclosure provides a method for generating DMRS sequences, including:
acquiring, by a terminal, a DMRS sequence initial value corresponding to an enhanced physical downlink control channel (E-PDCCH), and a DMRS sequence initial value corresponding to a physical downlink shared channel (PDSCH); and
generating a DMRS sequence corresponding to the E-PDCCH using the DMRS sequence initial value corresponding to the E-PDCCH, and a DMRS sequence corresponding to the PDSCH using the DMRS sequence initial value corresponding to the PDSCH.

The DMRS sequence initial value corresponding to the E-PDCCH is different from the DMRS sequence initial value corresponding to the PDSCH.

Another embodiment of the present disclosure provides a method for transmitting a DMRS sequence initial value, including:
transmitting, by a base station, a parameter of a DMRS sequence initial value corresponding to an E-PDCCH or the DMRS sequence initial value corresponding to the E-PDCCH, and/or a parameter of a DMRS sequence initial value corresponding to a PDSCH or the DMRS sequence initial value corresponding to the PDSCH, to a terminal.

The parameter of the DMRS sequence initial value corresponding to the E-PDCCH is different from the parameter of the DMRS sequence initial value corresponding to the PDSCH, and the DMRS sequence initial value corresponding to the E-PDCCH is different from the DMRS sequence initial value corresponding to the PDSCH.

Another embodiment of the present invention provides a communication terminal, including:
an acquisition module configured to acquire a DMRS sequence initial value corresponding to an E-PDCCH and a DMRS sequence initial value corresponding to a PDSCH; and
a generation module configured to generate a DMRS sequence corresponding to the E-PDCCH using the DMRS sequence initial value corresponding to the E-PDCCH, and generate a DMRS sequence corresponding to the PDSCH using the DMRS sequence initial value corresponding to the PDSCH.

The DMRS sequence initial value corresponding to the E-PDCCH is different from the DMRS sequence initial value corresponding to the PDSCH.

Another embodiment of the present disclosure provides a base station, including:
a transmission module configured to transmit a parameter of a DMRS sequence initial value corresponding to an E-PDCCH or the DMRS sequence initial value corresponding to the E-PDCCH, and/or a parameter of a DMRS sequence initial value corresponding to a PDSCH or the DMRS sequence initial value corresponding to the PDSCH, to a terminal.

The parameter of the DMRS sequence initial value corresponding to the E-PDCCH is different from the parameter of the DMRS sequence initial value corresponding to the PDSCH, and the DMRS sequence initial value corresponding to the E-PDCCH is different from the DMRS sequence initial value corresponding to the PDSCH.

According to the present disclosure, the system interference may be reduced, the system performance may be enhanced and the scheduling flexibility of a communication system may be improved.

### BRIEF DESCRIPTION OF THE DRAWINGS

Fig.1 is a flow chart of a method for generating DMRS sequences according to one embodiment of the present disclosure; and
Fig.2 is a schematic view showing a communication terminal according to one embodiment of the present disclosure.

### DETAILED DESCRIPTION OF THE PREFERRED EMBODIMENTS

Embodiments of the present disclosure will be described in details hereinafter in conjunction with the drawings.

According to a method for generating DMRS sequences of the present disclosure, in a communication system, an identical UE generates different DMRS sequence initial values corresponding to an E-PDCCH and an EPDSCH, respectively. That is, the identical UE generates two different DMRS sequences corresponding to the E-PDCCH and the PDSCH, respectively.

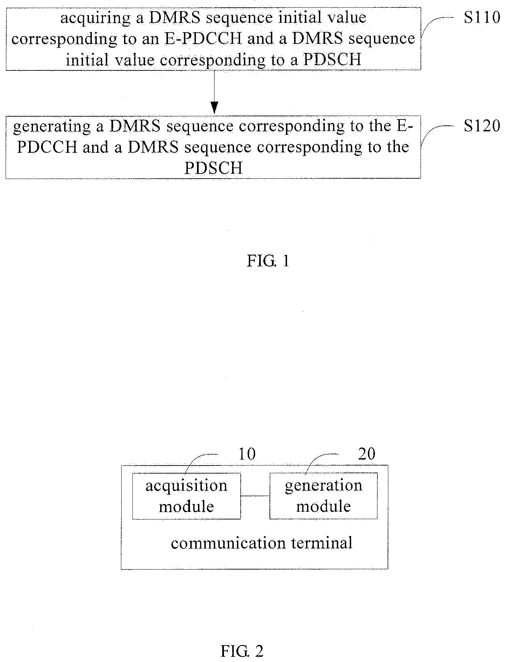

Fig.1 is a flow chart of a method for generating DMRS sequences according to one embodiment of the present disclosure. As shown in Fig.1, at Step S110, acquiring, by a terminal, a DMRS sequence initial value corresponding to an E-PDCCH and a DMRS sequence initial value corresponding to a PDSCH. At Step S120, generating, by the terminal, a DMRS sequence corresponding to the E-PDCCH using the DMRS sequence initial value corresponding to the E-PDCCH, and a DMRS sequence corresponding to the PDSCH using the DMRS sequence initial value corresponding to the PDSCH. The DMRS sequence initial value corresponding to the E-PDCCH is different from the DMRS sequence initial value corresponding to the PDSCH.

Alternatively, the DMRS sequence corresponding to the E-PDCCH and/or the DMRS sequence corresponding to the E-PDCCH may be generated in a default manner of a system. For example, the terminal may acquire a predetermined DRMS sequence initial value corresponding to the E-PDCCH and/or a predetermined DMRS sequence initial value corresponding to the PDSCH in accordance with a communication protocol.

Alternatively, the terminal may receive the DMRS sequence initial value corresponding to the E-PDCCH and/or the DMRS sequence initial value corresponding to the PDSCH from a base station via high-layer signaling (e.g., RRC signaling).

Alternatively, the terminal may receive the DMRS sequence initial value corresponding to the E-PDCCH and/or the DMRS sequence initial value corresponding to the PDSCH from the base station via physical layer control channel signaling.

It should be appreciated that, the above ways for acquiring the DMRS sequence initial values may be used in combination.

For example, the terminal may acquire the predetermined DMRS sequence initial value corresponding to the E-PDCCH in accordance with the communication protocol, and receive the DMRS sequence initial value corresponding to the PDSCH from the base station via the RRC signaling or the physical layer control channel signaling. The terminal may further receive the DMRS sequence initial value corresponding to the E-PDCCH from the base station via the RRC signaling, and acquire the predetermined DRMS sequence initial value corresponding to the PDSCH in accordance with the communication protocol or receive the DMRS sequence initial value corresponding to the PDSCH from the base station via the physical layer control channel signaling. The terminal may further receive the DMRS sequence initial value corresponding to the E-PDCCH from the base station via the physical layer control channel signaling, and acquire the predetermined DMRS sequence initial value corresponding to the PDSCH in accordance with the communication protocol or receive the DMRS sequence initial value corresponding to the PDSCH from the base station via the RRC signaling.

Alternatively, in the method, the step of acquiring, by the terminal, the DMRS sequence initial value corresponding to the E-PDCCH may include: acquiring, by the terminal, a parameter of the DMRS sequence initial value corresponding to the E-PDCCH, and generating the DMRS sequence initial value corresponding to the E-PDCCH using the parameter of the DMRS sequence initial value corresponding to the E-PDCCH. The step of acquiring, by the terminal, the DMRS sequence initial value corresponding to the PDSCH may include: acquiring, by the terminal, a parameter of the DMRS sequence initial value corresponding to the PDSCH, and generating the DMRS sequence initial value corresponding to the PDSCH using the parameter of the DMRS sequence initial value corresponding to the PDSCH.

For example, the terminal may acquire the parameter of the predetermined DMRS sequence initial value corresponding to the E-PDCCH and/or the parameter of the predetermined DMRS sequence initial value corresponding to the PDSCH in accordance with the communication protocol. The terminal may also receive the parameter of the DMRS sequence initial value corresponding to the E-PDCCH and/or the parameter of the DMRS sequence initial value corresponding to the PDSCH from the base station via the high layer signaling (e.g., the RRC signaling).The terminal may further receive the parameter of the DMRS sequence initial value corresponding to the E-PDCCH and/or the parameter of the DMRS sequence initial value corresponding to the PDSCH from the base station via the physical layer control channel signaling.

Then, for example, the terminal may generate the DMRS sequence initial value according to the formula: *Cᵢₙᵢₜ*=(└*nₛ*/2┘+1)·(2*X*+1)·2¹⁶+*Y,* where *Cᵢₙᵢₜ* represents the initial value, *nₛ* represents a timeslot number, and X and Y represent parameters of the DMRS sequence initial value, respectively.

The present disclosure also relates to a method for transmitting a DMRS sequence initial value. A base station transmits a parameter of a DMRS sequence initial value corresponding to an E-PDCCH or the DMRS sequence initial value corresponding to the E-PDCCH, and/or a parameter of a DMRS sequence initial value corresponding to a PDSCH or the DMRS sequence initial value corresponding to the PDSCH, to a terminal. The parameter of the DMRS sequence initial value corresponding to the E-PDCCH is different from the parameter of the DMRS sequence initial value corresponding to the PDSCH, and the DMRS sequence initial value corresponding to the E-PDCCH is different from the DMRS sequence initial value corresponding to the PDSCH.

According to the method for transmitting the DMRS sequence initial value of this embodiment, the base station may transmit the parameter of the DMRS sequence initial value corresponding to the E-PDCCH or the DMRS sequence initial value corresponding to the E-PDCCH, and/or the parameter of the DMRS sequence initial value corresponding to the PDSCH or the DMRS sequence initial value corresponding to the PDSCH, to the terminal, so that the terminal generates the DMRS sequence initial value corresponding to the E-PDCCH in accordance with the received parameter of the DMRS sequence initial value corresponding to the E-PDCCH, and/or generates the DMRS sequence initial value corresponding to the PDSCH in accordance with the received parameter of the DMRS sequence initial value corresponding to the PDSCH; or generates the DMRS sequence corresponding to the E-PDCCH in accordance with the DMRS sequence initial value corresponding to the E-PDCCH, and/or generates the DMRS sequence corresponding to the PDSCH in accordance with the DMRS sequence initial value corresponding to the PDSCH.

Alternatively, the base station may transmit the parameter of the DMRS sequence initial value corresponding to the E-PDCCH or the DMRS sequence initial value corresponding to the E-PDCCH, and/or the parameter of the DMRS sequence initial value corresponding to the PDSCH or the DMRS sequence initial value corresponding to the PDSCH, to the terminal via RRC signaling.

Alternatively, the base state may transmit the parameter of the DMRS sequence initial value corresponding to the E-PDCCH or the DMRS sequence initial value corresponding to the E-PDCCH, and/or the parameter of the DMRS sequence initial value corresponding to the PDSCH or the DMRS sequence initial value corresponding to the PDSCH to the terminal via the physical layer control channel signaling.

Alternatively, the base station may transmit the parameter of the DMRS sequence initial value corresponding to the E-PDCCH or the DMRS sequence initial value corresponding to the E-PDCCH to the terminal via the RRC signaling, and/or transmit the parameter of the DMRS sequence initial value corresponding to the PDSCH or the DMRS sequence initial value corresponding to the PDSCH to the terminal via the physical layer control channel signaling.

Alternatively, the base station may transmit the parameter of the DMRS sequence initial value corresponding to the E-PDCCH or the DMRS sequence initial value corresponding to the E-PDCCH to the terminal via the physical layer control channel signaling, and/or transmit the parameter of the DMRS sequence initial value corresponding to the PDSCH or the DMRS sequence initial value corresponding to the PDSCH to the terminal via the RRC signaling.

It should be appreciated that, the above ways for acquiring the DMRS sequence initial values may be used in combination.

For example, the base station transmits the parameter of the DMRS sequence initial value corresponding to the PDSCH or the DMRS sequence initial value corresponding to the PDSCH via the RRC signaling, or transmits the parameter of the DMRS sequence initial value corresponding to the PDSCH or the DMRS sequence initial value corresponding to the PDSCH via the physical layer control channel signaling; the terminal may acquire the parameter of the predetermined DMRS sequence initial value corresponding to the E-PDCCH or the predetermined DMRS sequence initial value corresponding to the E-PDCCH in accordance with a communication protocol. The base station may also transmit the parameter of the DMRS sequence initial value corresponding to the E-PDCCH or the DMRS sequence initial value corresponding to the E-PDCCH via the RRC signaling, and transmit the parameter of the DMRS sequence initial value corresponding to the PDSCH or the DMRS sequence initial value corresponding to the PDSCH via the physical layer control channel signaling; or, the terminal may receive the parameter of the predetermined DMRS sequence initial value corresponding to the PDSCH or the predetermined DMRS sequence initial value corresponding to the PDSCH in accordance with the communication protocol. The base station may further transmit the parameter of the DMRS sequence initial value corresponding to the E-PDCCH or the DMRS sequence initial value corresponding to the E-PDCCH via the physical layer control channel signaling, and the terminal acquires the parameter of the predetermined DMRS sequence initial value corresponding to the PDSCH or the predetermined DMRS sequence initial value corresponding to the PDSCH in accordance with the communication protocol; or, the base station may further transmit the parameter of the DMRS sequence initial value corresponding to the PDSCH or the DMRS sequence initial value corresponding to the PDSCH via the RRC signaling.

Fig. 2 shows a communication terminal according to one embodiment of the present disclosure. The communication terminal includes an acquisition module 10 and a generation module 20. The acquisition module 10 is configured to acquire a DMRS sequence initial value corresponding to an E-PDCCH and acquire a DMRS sequence initial value corresponding to a PDSCH. The generation module 20 is configured to generate a DMRS sequence corresponding to the E-PDCCH using the DMRS sequence initial value corresponding to the E-PDCCH and generate a DMRS sequence corresponding to the PDSCH using the DMRS sequence initial value corresponding to the PDSCH. The DMRS sequence initial value corresponding to the E-PDCCH is different from the DMRS sequence initial value corresponding to the PDSCH.

Alternatively, the acquisition module 10 may acquire a predetermined DMRS sequence initial value corresponding to the E-PDCCH, and/or a predetermined DMRS sequence initial value corresponding to the PDSCH in accordance with a communication protocol.

Alternatively, the acquisition module 10 may receive the DMRS sequence initial value corresponding to the E-PDCCH and/or the DMRS sequence initial value corresponding to the PDSCH from the base station via high layer signaling (e.g., RRC signaling).

Alternatively, the acquisition module 10 may receive the DMRS sequence initial value corresponding to the E-PDCCH and/or the DMRS sequence initial value corresponding to the PDSCH from the base station via physical layer control channel signaling.

It should be appreciated that, the above ways for acquiring the DMRS sequence initial values by the terminal may be used in combination.

For example, the acquisition module 10 may acquire the predetermined DMRS sequence initial value corresponding to the E-PDCCH in accordance with the communication protocol, and receive the DMRS sequence initial value corresponding to the PDSCH from the base station via the RRC signaling or receive the DMRS sequence initial value corresponding to the PDSCH from the base station via the physical layer control channel signaling. The acquisition module 10 may also receive the DMRS sequence initial value corresponding to the E-PDCCH from the base station via the RRC signaling, and acquire the predetermined DMRS sequence initial value corresponding to the PDSCH in accordance with the communication protocol or receive the DMRS sequence initial value corresponding to the PDSCH from the base station via the physical layer control channel signaling. The acquisition module 10 may further receive the DMRS sequence initial value corresponding to the E-PDCCH from the base station via the physical layer control channel signaling, and acquire the predetermined DMRS sequence initial value corresponding to the PDSCH in accordance with the communication protocol or receive the DMRS sequence initial value corresponding to the PDSCH from the base station via the RRC signaling.

Alternatively, the acquisition module 10 may acquire a parameter of the DMRS sequence initial value corresponding to the E-PDCCH. The acquisition module 10 may acquire a parameter of the DMRS sequence initial value corresponding to the PDSCH. For example, the acquisition module 10 may acquire the parameter of the predetermined DMRS sequence initial value corresponding to the E-PDCCH and/or the parameter of the predetermined DMRS sequence initial value corresponding to the PDSCH in accordance with the communication protocol. The acquisition module 10 may also receive the parameter of the DMRS sequence initial value corresponding to the E-PDCCH and/or the parameter of the DMRS sequence initial value corresponding to the PDSCH from the base station via the high layer signaling (e.g., the RRC signaling). The acquisition module 10 may further receive the parameter of the DMRS sequence initial value corresponding to the E-PDCCH and/or the parameter of the DMRS sequence initial value corresponding to the PDSCH from the base station via the physical layer control channel signaling.

Then, the generation module 20 generates the DMRS sequence initial value corresponding to the E-PDCCH using the parameter of the DMRS sequence initial value corresponding to the E-PDCCH. The generation module 20 generates the DMRS sequence initial value corresponding to the PDSCH using the parameter of the DMRS sequence initial value corresponding to the PDSCH. For example, the generation module 20 may generate the DMRS sequence initial value according to the formula: *Cᵢₙᵢₜ*=(└*nₛ*/2┘+1)·(2*X*+1)·2¹⁶+*Y*, where *Cᵢₙᵢₜ* represents the initial value, *nₛ* represents a timeslot number, and X and Y represent the parameters of the DMRS sequence initial value, respectively.

The present disclosure further relates to a base station. The base station includes a transmission module. The transmission module is configured to transmit a parameter of a DMRS sequence initial value corresponding to an E-PDCCH or the DMRS sequence initial value corresponding to the E-PDCCH, and/or a parameter of a DMRS sequence initial value corresponding to a PDSCH or the DMRS sequence initial value corresponding to the PDSCH, to a terminal. The parameter of the DMRS sequence initial value corresponding to the E-PDCCH is different from the parameter of the DMRS sequence initial value corresponding to the PDSCH, and the DMRS sequence initial value corresponding to the E-PDCCH is different from the DMRS sequence initial value corresponding to the PDSCH.

In this embodiment, the transmission module may transmit the parameter of the DMRS sequence initial value corresponding to the E-PDCCH or the DMRS sequence initial value corresponding to the E-PDCCH, and/or the parameter of the DMRS sequence initial value corresponding to the PDSCH or the DMRS sequence initial value corresponding to the PDSCH, to the terminal, so that the terminal generates the DMRS sequence initial value corresponding to the E-PDCCH using the received parameter of the DMRS sequence initial value corresponding to the E-PDCCH, and/or generates the DMRS sequence initial value corresponding to the PDSCH using the received parameter of the DMRS sequence initial value corresponding to the PDSCH; or generates the DMRS sequence corresponding to the E-PDCCH directly using the DMRS sequence initial value corresponding to the E-PDCCH, generates the DMRS sequence corresponding to the PDSCH directly using the DMRS sequence initial value corresponding to the PDSCH.

Alternatively, the transmission module may transmit the parameter of the DMRS sequence initial value corresponding to the E-PDCCH or the DMRS sequence initial value corresponding to the E-PDCCH, and/or the parameter of the DMRS sequence initial value corresponding to the PDSCH or the DMRS sequence initial value corresponding to the PDSCH, to the terminal via RRC signaling.

Alternatively, the transmission module may transmit the parameter of the DMRS sequence initial value corresponding to the E-PDCCH or the DMRS sequence initial value corresponding to the E-PDCCH, and/or the parameter of the DMRS sequence initial value corresponding to the PDSCH or the DMRS sequence initial value corresponding to the PDSCH, to the terminal via physical layer control channel signaling.

Alternatively, the transmission module may transmit the parameter of the DMRS sequence initial value corresponding to the E-PDCCH or the DMRS sequence initial value corresponding to the E-PDCCH to the terminal via the RRC signaling, and transmit the parameter of the DMRS sequence initial value corresponding to the PDSCH or the DMRS sequence initial value corresponding to the PDSCH to the terminal via the physical layer control channel signaling.

Alternatively, the transmission module may transmit the parameter of the DMRS sequence initial value corresponding to the E-PDCCH or the DMRS sequence initial value corresponding to the E-PDCCH to the terminal via the physical layer control channel signaling, and transmit the parameter of the DMRS sequence initial value corresponding to the PDSCH or the DMRS sequence initial value corresponding to the PDSCH to the terminal via the RRC signaling.

It should be appreciated that, the above ways for transmitting the parameters of the DMRS sequence initial values or the DMRS sequence initial values by the base station may be used in combination.

For example, the transmission module of the base station may transmit the parameter of the DMRS sequence initial value corresponding to the PDSCH or the DMRS sequence initial value corresponding to the PDSCH via the RRC signaling, or transmit the parameter of the DMRS sequence initial value corresponding to the PDSCH or the DMRS sequence initial value corresponding to the PDSCH via the physical layer control channel signaling; the terminal may acquire the parameter of the predetermined DMRS sequence initial value corresponding to the E-PDCCH or the predetermined DMRS sequence initial value corresponding to the E-PDCCH in accordance with the communication protocol. The transmission module of the base station may also transmit the parameter of the DMRS sequence initial value corresponding to the E-PDCCH or the DMRS sequence initial value corresponding to the E-PDCCH via the RRC signaling, and transmit the parameter of the DMRS sequence initial value corresponding to the PDSCH or the DMRS sequence initial value corresponding to the PDSCH via the physical layer control channel signaling, or the terminal may acquire the parameter of the predetermined DMRS sequence initial value corresponding to the PDSCH or the predetermined DMRS sequence initial value corresponding to the PDSCH in accordance with the communication protocol. The transmission module of the base station may further transmit the parameter of the DMRS sequence initial value corresponding to the E-PDCCH or the DMRS sequence initial value corresponding to the E-PDCCH via the physical layer control channel signaling, and the terminal may acquire the parameter of the predetermined DMRS sequence initial value corresponding to the PDSCH or the predetermined DMRS sequence initial value corresponding to the PDSCH in accordance with the communication protocol, or the base station transmits the parameter of the DMRS sequence initial value corresponding to the PDSCH or the DMRS sequence initial value corresponding to the PDSCH via the RRC signaling.

Through the above-mentioned embodiments, the system interference may be reduced, the system performance may be enhanced, and the scheduling flexibility of the communication system may be improved.

The foregoing is merely exemplary embodiments of the present disclosure, but shall not be used to limit the scope of the present disclosure. Any equivalents made in accordance with the disclosure of the specification and drawings, or any direct or indirect applications thereof to the other related fields, shall also be included in the scope of the present disclosure.

## Claims

1. A method for generating demodulation reference signal, DMRS, sequences, comprising steps of:
acquiring, by a communication terminal, a parameter corresponding to the DMRS sequence initial value corresponding to an enhanced physical downlink control channel, E-PDCCH, and generating a DMRS sequence initial value corresponding to the E-PDCCH using the parameter corresponding to the DMRS sequence initial value corresponding to the E-PDCCH; and acquiring, by the communication terminal, a parameter corresponding to the DMRS sequence initial value corresponding to a physical downlink shared channel, PDSCH, and generating the DMRS sequence initial value corresponding to the PDSCH using the parameter corresponding to the DMRS sequence initial value corresponding to the PDSCH (S110); and
generating, by the communication terminal, a DMRS sequence corresponding to the E-PDCCH using the DMRS sequence initial value corresponding to the E-PDCCH, and a DMRS sequence corresponding to the PDSCH using the DMRS sequence initial value corresponding to the PDSCH (S120),
wherein the DMRS sequence initial value corresponding to the E-PDCCH is different from the DMRS sequence initial value corresponding to the PDSCH.

2. The method according to claim 1, wherein the step (S110) comprises at least one of:
(a) acquiring, by the communication terminal, a predetermined DMRS sequence initial value corresponding to the E-PDCCH in accordance with a communication protocol;
(b) acquiring, by the communication terminal, the DMRS sequence initial value corresponding to the E-PDCCH from a base station via RRC signaling; and
(c) acquiring, by the communication terminal, the DMRS sequence initial value corresponding to the E-PDCCH from the base station via physical layer control channel signaling.

3. The method according to claim 1, wherein the step (S110) comprises at least one of:
(d) acquiring, by the communication terminal, a predetermined DMRS sequence initial value corresponding to the PDSCH in accordance with a communication protocol;
(e) acquiring, by the communication terminal, the DMRS sequence initial value corresponding to the PDSCH from the base station via RRC signaling; and
(f) acquiring, by the communication terminal, the DMRS sequence initial value corresponding to the PDSCH from the base station via physical layer control channel signaling.

4. The method according to claim 1, wherein the step (S110) comprises at least one of:
(g) acquiring, by the communication terminal, a parameter corresponding to a predetermined DMRS sequence initial value corresponding to the E-PDCCH in accordance with a communication protocol;
(h) acquiring, by the communication terminal, the parameter corresponding to the DMRS sequence initial value corresponding to the E-PDCCH from a base station via RRC signaling; and
(i) acquiring, by the communication terminal, the parameter corresponding to the DMRS sequence initial value corresponding to the E-PDCCH from the base station via physical layer control channel signaling.

5. The method according to claim 1, wherein the step (S110) comprises at least one of:
(j) acquiring, by the communication terminal, a parameter corresponding to a predetermined DMRS sequence initial value corresponding to the PDSCH in accordance with a communication protocol;
(k) acquiring, by the communication terminal, the parameter corresponding to the DMRS sequence initial value corresponding to the PDSCH from a base station via RRC signaling; and
(l) acquiring, by the communication terminal, the parameter corresponding to the DMRS sequence initial value corresponding to the PDSCH from the base station via physical layer control channel signaling.

6. A method for transmitting a demodulation reference signal DMRS sequence initial value, comprising steps of:
transmitting, by the base station, a parameter corresponding to the DMRS sequence initial value corresponding to an enhanced physical downlink control channel, E-PDCCH, or the DMRS sequence initial value corresponding to the E-PDCCH to a communication terminal via Radio Resource Control, RRC, signaling, or transmitting, by the base station, the parameter corresponding to the DMRS sequence initial value corresponding to the E-PDCCH or the DMRS sequence initial value corresponding to the E-PDCCH to the terminal via physical layer control channel signaling, and transmitting the parameter corresponding to the DMRS sequence initial value corresponding to the PDSCH or the DMRS sequence initial value corresponding to a physical downlink shared channel, PDSCH, to the terminal via RRC signaling, or transmitting the parameter corresponding to the DMRS sequence initial value corresponding to the PDSCH or the DMRS sequence initial value corresponding to the PDSCH to the terminal via physical layer control channel signaling, to a communication terminal,
wherein the parameter corresponding to the DMRS sequence initial value corresponding to the E-PDCCH is different from the parameter corresponding to the DMRS sequence initial value corresponding to the PDSCH, and the DMRS sequence initial value corresponding to the E-PDCCH is different from the DMRS sequence initial value corresponding to the PDSCH.

7. A communication terminal, comprising:
an acquisition module (10) configured to acquire a parameter corresponding to the DMRS sequence initial value corresponding to an enhanced physical downlink control channel, E-PDCCH, and generating the DMRS sequence initial value corresponding to the E-PDCCH using the parameter corresponding to the DMRS sequence initial value corresponding to the E-PDCCH; acquiring, by the communication terminal, a parameter corresponding to the DMRS sequence initial value corresponding to a physical downlink shared channel, PDSCH, and generating the DMRS sequence initial value corresponding to the PDSCH using the parameter corresponding to the DMRS sequence initial value corresponding to the PDSCH; and
a generation module (20) configured to generate a DMRS sequence corresponding to the E-PDCCH using the DMRS sequence initial value corresponding to the E-PDCCH, and generate a DMRS sequence corresponding to the PDSCH using the DMRS sequence initial value corresponding to the PDSCH,
wherein the DMRS sequence initial value corresponding to the E-PDCCH is different from the DMRS sequence initial value corresponding to the PDSCH.

8. The communication terminal according to claim 7, wherein
the acquisition module (10) acquires at least one of: (a) a predetermined DMRS sequence initial value corresponding to the E-PDCCH in accordance with a communication protocol; (b) the DMRS sequence initial value corresponding to the E-PDCCH from a base station via RRC signaling; and (c) the DMRS sequence initial value corresponding to the E-PDCCH from the base station via physical layer control channel signaling.

9. The communication terminal according to claim 7, wherein
the acquisition module (10) acquires at least one of: (d) a predetermined DMRS sequence initial value corresponding to the PDSCH in accordance with a communication protocol; (e) the DMRS sequence initial value corresponding to the PDSCH from the base station via RRC signaling; and (f) the DMRS sequence initial value corresponding to the PDSCH from the base station via physical layer control channel signaling.

10. The communication terminal according to claim 7, wherein
the acquisition module (10) acquires at least one of: (g) a parameter corresponding to a predetermined DMRS sequence initial value corresponding to the E-PDCCH in accordance with a communication protocol; (h) the parameter corresponding to the DMRS sequence initial value corresponding to the E-PDCCH from the base station via RRC signaling; and (i) the parameter corresponding to the DMRS sequence initial value corresponding to the E-PDCCH from the base station via physical layer control channel signaling.

11. The communication terminal according to claim 7, wherein
the acquisition module (10) acquires at least one of: (j) a parameter corresponding to a predetermined DMRS sequence initial value corresponding to the PDSCH in accordance with the communication protocol; (k) the parameter corresponding to the DMRS sequence initial value corresponding to the PDSCH from the base station via RRC signaling; and (1) the parameter corresponding to the DMRS sequence initial value corresponding to the PDSCH from the base station via physical layer control channel signaling.

12. A base station comprising:
a transmission module configured to transmits a parameter corresponding to the DMRS sequence initial value corresponding to an enhanced physical downlink control channel, E-PDCCH, or the DMRS sequence initial value corresponding to the E-PDCCH to a communication terminal via RRC signaling, or transmits a parameter corresponding to the DMRS sequence initial value corresponding to the E-PDCCH or the DMRS sequence initial value corresponding to the E-PDCCH to the terminal via physical layer control channel signaling, and transmit the parameter corresponding to the DMRS sequence initial value corresponding to the PDSCH or the DMRS sequence initial value corresponding to a physical downlink shared channel, PDSCH, to the communication terminal via RRC signaling, or transmit the parameter corresponding to the DMRS sequence initial value corresponding to the PDSCH or the DMRS sequence initial value corresponding to the PDSCH to the terminal via physical layer control channel signaling, to the communication terminal,
wherein the parameter corresponding to the DMRS sequence initial value corresponding to the E-PDCCH is different from the parameter corresponding to the DMRS sequence initial value corresponding to the PDSCH, and the DMRS sequence initial value corresponding to the E-PDCCH is different from the DMRS sequence initial value corresponding to the PDSCH.

## Patentansprüche

1. Verfahren zum Erzeugen von Demodulationsreferenzsignal-, DMRS, -Sequenzen, umfassend Schritte von:
Erfassen, durch ein Kommunikationsendgerät, eines Parameters entsprechend dem DMRS-Sequenz-Anfangswert entsprechend einem verbesserten physikalischen Downlink-Steuerkanal, E-PDCCH, und Erzeugen eines DMRS-Anfangswerts entsprechend dem E-PDCCH unter Verwendung des Parameters entsprechend dem DMRS-Sequenz-Anfangswert entsprechend dem E-PDCCH; und Erfassen, durch das Kommunikationsendgerät, eines Parameters entsprechend dem DMRS-Sequenz-Anfangswert entsprechend einem gemeinsam genutzen physikalischen Downlink-Kanal, PDSCH, und Erzeugen des DMRS-Sequenz-Anfangswerts entsprechend dem PDSCH unter Verwendung des Parameters entsprechend dem DMRS-Sequenz-Anfangswert entsprechend dem PDSCH (S110); und
Erzeugen, durch das Kommunikationsendgerät, einer DMRS-Sequenz entsprechend dem E-PDCCH unter Verwendung des DMRS-Sequenz-Anfangswerts entsprechend dem E-PDCCH und einer DMRS-Sequenz entsprechend dem PDSCH unter Verwendung des DMRS-Sequenz-Anfangswerts entsprechend dem PDSCH (S120),
wobei sich der DMRS-Sequenz-Anfangswert, der dem E-PDCCH entspricht, vom DMRS-Sequenz-Anfangswert, der dem PDSCH entspricht, unterscheidet.

2. Verfahren nach Anspruch 1, wobei der Schritt (S110) mindestens eines umfasst von:
a) Erfassen, durch das Kommunikationsendgerät, eines vorbestimmten DMRS-Sequenz-Anfangswerts entsprechend dem E-PDCCH in Übereinstimmung mit einem Kommunikationsprotokoll;
b) Erfassen, durch das Kommunikationsendgerät, des DMRS-Sequenz-Anfangswerts entsprechend dem E-PDCCH von einer Basisstation über RRC-Signalisierung; und
c) Erfassen, durch das Kommunikationsendgerät, des DMRS-Sequenz-Anfangswerts entsprechend dem E-PDCCH von der Basisstation über Steuerkanalsignalisierung der physikalischen Schicht.

3. Verfahren nach Anspruch 1, wobei der Schritt (S110) mindestens eines umfasst von:
d) Erfassen, durch das Kommunikationsendgerät, eines vorbestimmten DMRS-Sequenz-Anfangswerts entsprechend dem PDSCH in Übereinstimmung mit einem Kommunikationsprotokoll;
e) Erfassen, durch das Kommunikationsendgerät, des DMRS-Sequenz-Anfangswerts entsprechend dem PDSCH von der Basisstation über RRC-Signalisierung; und
f) Erfassen, durch das Kommunikationsendgerät, des DMRS-Sequenz-Anfangswerts entsprechend dem PDSCH von der Basisstation über Steuerkanalsignalisierung der physikalischen Schicht.

4. Verfahren nach Anspruch 1, wobei der Schritt (S110) mindestens eines umfasst von:
g) Erfassen, durch das Kommunikationsendgerät, eines Parameters entsprechend einem vorbestimmten DMRS-Sequenz-Anfangswert entsprechend dem E-PDCCH in Übereinstimmung mit einem Kommunikationsprotokoll;
h) Erfassen, durch das Kommunikationsendgerät, des Parameters entsprechend dem DMRS-Sequenz-Anfangswert entsprechend dem E-PDCCH von einer Basisstation über RRC-Signalisierung; und
i) Erfassen, durch das Kommunikationsendgerät, des Parameters entsprechend dem DMRS-Sequenz-Anfangswert entsprechend dem E-PDCCH von der Basisstation, über Steuerkanalsignalisierung der physikalischen Schicht.

5. Verfahren nach Anspruch 1, wobei der Schritt (S110) mindestens eines umfasst von:
j) Erfassen, durch das Kommunikationsendgerät, eines Parameters entsprechend einem vorbestimmten DMRS-Sequenz-Anfangswerts entsprechend dem PDSCH, in Übereinstimmung mit einem Kommunikationsprotokoll;
k) Erfassen, durch das Kommunikationsendgerät, des Parameters entsprechend dem DMRS-Sequenz-Anfangswert entsprechend dem PDSCH von einer Basisstation über RRC-Signalisierung; und
l) Erfassen, durch das Kommunikationsendgerät, des Parameters entsprechend dem DMRS-Sequenz-Anfangswert entsprechend dem PDSCH von der Basisstation über Steuerkanalsignalisierung der physikalischen Schicht.

6. Verfahren zum Übertragen eines Demodulationsreferenzsignal-, DMRS, -Sequenz-Anfangswerts, umfassend Schritte von:
Übertragen, durch die Basisstation, eines Parameters entsprechend dem DMRS-Sequenz-Anfangswert entsprechend einem verbesserten physikalischen Downlink-Steuerkanal, E-PDCCH, oder dem DMRS-Sequenz-Anfangswert entsprechend dem E-PDCCH über Funkressourcensteuerungs-, RRC, Signalisierung an ein Kommunikationsendgerät, oder Übertragen, durch die Basisstation, des Parameters entsprechend dem DMRS-Sequenz-Anfangswert entsprechend dem E-PDCCH oder dem DMRS-Sequenz-Anfangswert entsprechend dem E-PDCCH über Steuerkanalsignalisierung der physikalischen Schicht an das Endgerät, und Übertragen des Parameters entsprechend dem DMRS-Sequenz-Anfangswert entsprechend dem PDSCH oder dem DMRS-Sequenz-Anfangswert entsprechend einem gemeinsam genutzen physikalischen Downlink-Kanal, PDSCH, über RRC-Signalisierung an das Endgerät, oder Übertragen des Parameters entsprechend dem DMRS-Sequenz-Anfangswert entsprechend dem PDSCH oder dem DMRS-Sequenz-Anfangswert entsprechend dem PDSCH über Steuerkanalsignalisierung der physikalischen Schicht an das Endgerät, an ein Kommunikationsendgerät,
wobei sich der Parameter entsprechend dem DMRS-Sequenz-Anfangswert entsprechend dem E-PDCCH vom Parameter entsprechend dem DMRS-Sequenz-Anfangswert entsprechend dem PDSCH unterscheidet und der DMRS-Sequenz-Anfangswert entsprechend dem E-PDCCH sich vom DMRS-Sequenz-Anfangswert entsprechend dem PDSCH unterscheidet.

7. Kommunikationsendgerät, umfassend:
ein Erfassungsmodul (10), das konfiguriert ist zum Erfassen eines Parameters entsprechend dem DMRS-Sequenz-Anfangswert entsprechend einem verbesserten physikalischen Downlink-Steuerkanal, E-PDCCH, und Erzeugen des DMRS-Sequenz-Anfangswerts entsprechend dem E-PDCCH unter Verwendung des Parameters entsprechend dem DMRS-Sequenz-Anfangswert entsprechend dem E-PDCCH; Erfassen, durch das Kommunikationsendgerät, eines Parameters entsprechend dem DMRS-Sequenz-Anfangswert entsprechend einem gemeinsam genutzen physikalischen Downlink-Kanal, PDSCH, und Erzeugen des DMRS-Sequenz-Anfangswerts entsprechend dem PDSCH unter Verwendung des Parameters entsprechend dem DMRS-Sequenz-Anfangswert entsprechend dem PDSCH; und
ein Erzeugungsmodul (20), das konfiguriert ist zum Erzeugen einer DMRS-Sequenz entsprechend dem E-PDCCH unter Verwendung des DMRS-Sequenz-Anfangswerts entsprechend dem E-PDCCH und Erzeugen einer DMRS-Sequenz entsprechend dem PDSCH unter Verwendung des DMRS-Sequenz-Anfangswerts entsprechend dem PDSCH,
wobei sich der DMRS-Sequenz-Anfangswert, der dem E-PDCCH entspricht, vom DMRS-Sequenz-Anfangswert, der dem PDSCH entspricht, unterscheidet.

8. Kommunikationsendgerät nach Anspruch 7, wobei
das Erfassungsmodul (10) mindestens eines erfasst von: (a) einem vorbestimmten DMRS-Sequenz-Anfangswert entsprechend dem E-PDCCH in Übereinstimmung mit einem Kommunikationsprotokoll; (b) dem DMRS-Sequenz-Anfangswert entsprechend dem E-PDCCH von einer Basisstation über RRC-Signalisierung; und (c) dem DMRS-Sequenz-Anfangswert entsprechend dem E-PDCCH von der Basisstation über Steuerkanalsignalisierung der physikalischen Schicht.

9. Kommunikationsendgerät nach Anspruch 7, wobei
das Erfassungsmodul (10) mindestens eines erfasst von: (d) einem vorbestimmten DMRS-Sequenz-Anfangswert entsprechend dem PDSCH, in Übereinstimmung mit einem Kommunikationsprotokoll; (e) dem DMRS-Sequenz-Anfangswert entsprechend dem PDSCH von der Basisstation über RRC-Signalisierung; und (f) dem DMRS-Sequenz-Anfangswert entsprechend dem PDSCH von der Basisstation über Steuerkanalsignalisierung der physikalischen Schicht.

10. Kommunikationsendgerät nach Anspruch 7, wobei
das Erfassungsmodul (10) mindestens eines erfasst von: (g) einem Parameter entsprechend einem vorbestimmten DMRS-Sequenz-Anfangswert entsprechend dem E-PDCCH, in Übereinstimmung mit einem Kommunikationsprotokoll; (h) dem Parameter entsprechend dem DMRS-Sequenz-Anfangswert entsprechend dem E-PDCCH von der Basisstation über RRC-Signalisierung; und (i) dem Parameter entsprechend dem DMRS-Sequenz-Anfangswert entsprechend dem E-PDCCH von der Basisstation über Steuerkanalsignalisierung der physikalischen Schicht.

11. Kommunikationsendgerät nach Anspruch 7, wobei
das Erfassungsmodul (10) mindestens eines erfasst von: (j) einem Parameter entsprechend einem vorbestimmten DMRS-Sequenz-Anfangswert entsprechend dem PDSCH in Übereinstimmung mit dem Kommunikationsprotokoll; (k) dem Parameter entsprechend dem DMRS-Sequenz-Anfangswert entsprechend dem PDSCH von der Basisstation über RRC-Signalisierung; und (I) dem Parameter entsprechend dem DMRS-Sequenz-Anfangswert entsprechend dem PDSCH von der Basisstation über Steuerkanalsignalisierung der physikalischen Schicht.

12. Basisstation, umfassend:
ein Übertragungsmodul, das konfiguriert ist, einen Parameter entsprechend dem DMRS-Sequenz-Anfangswert entsprechend einem verbesserten physikalischen Downlink-Steuerkanal, E-PDCCH, oder dem DMRS-Sequenz-Anfangswert entsprechend dem E-PDCCH über RRC-Signalisierung an ein Kommunikationsendgerät zu übertragen, oder einen Parameter entsprechend dem DMRS-Sequenz-Anfangswert entsprechend dem E-PDCCH oder dem DMRS-Sequenz-Anfangswert entsprechend dem E-PDCCH über Steuerkanalsignalisierung der physikalischen Schicht an das Endgerät zu übertragen, und den Parameter entsprechend dem DMRS-Sequenz-Anfangswert entsprechend dem PDSCH oder dem DMRS-Sequenz-Anfangswert entsprechend einem gemeinsam genutzen physikalischen Downlink-Kanal, PDSCH, über RRC-Signalisierung an das Endgerät zu übertragen, oder den Parameter entsprechend dem DMRS-Sequenz-Anfangswert entsprechend dem PDSCH oder dem DMRS-Sequenz-Anfangswert entsprechend dem PDSCH an das Endgerät über Steuerkanalsignalisierung der physikalischen Schicht an das Kommunikationsendgerät zu übertragen,
wobei sich der Parameter entsprechend dem DMRS-Sequenz-Anfangswert entsprechend dem E-PDCCH vom Parameter entsprechend dem DMRS-Sequenz-Anfangswert entsprechend dem PDSCH unterscheidet und sich der DMRS-Sequenz-Anfangswert entsprechend dem E-PDCCH vom DMRS-Sequenz-Anfangswert entsprechend dem PDSCH unterscheidet.

## Revendications

1. Procédé de génération de séquences de signaux de référence de démodulation DMRS, comprenant les étapes consistant à :
acquérir par un terminal de communication un paramètre correspondant à la valeur initiale de séquence DMRS correspondant à un canal de commande à liaison descendante physique renforcée E-PDCCH et générer une valeur initiale de séquence DMRS correspondant au E-PDCCH en utilisant le paramètre correspondant à la valeur initiale de séquence DMRS correspondant au E-PDCCH, et acquérir par le terminal de communication un paramètre correspondant à la valeur initiale de séquence DMRS correspondant à un canal partagé à liaison descendante physique PDSCH et générer la valeur initiale de séquence DMRS correspondant au PDSCH en utilisant le paramètre correspondant à la valeur initiale de séquence DMRS correspondant au PDSCH (S110) ; et
générer par le terminal de communication une séquence DMRS correspondant au E-PDCCH en utilisant la valeur initiale de séquence DMRS correspondant au E-PDCCH et une séquence DMRS correspondant au PDSCH en utilisant la valeur initiale de séquence DMRS correspondant au PDSCH (S120),
dans lequel la valeur initiale de séquence DMRS correspondant au E-PDCCH est différente de la valeur initiale de séquence DMRS correspondant au PDSCH.

2. Procédé selon la revendication 1, dans lequel l'étape (S110) comprend au moins l'une des suivantes :
(a) l'acquisition par le terminal de communication d'une valeur initiale de séquence DMRS prédéterminée correspondant au E-PDCCH conformément à un protocole de communication ;
(b) l'acquisition par le terminal de communication de la valeur initiale de séquence DMRS correspondant au E-PDCCH à partir d'une station de base via une signalisation RRC ; et
(c) l'acquisition par le terminal de communication de la valeur initiale de séquence DMRS correspondant au E-PDCCH à partir de la station de base via une signalisation de canal de commande de couche physique.

3. Procédé selon la revendication 1, dans lequel l'étape (S110) comprend au moins l'une des suivantes :
(d) l'acquisition par le terminal de communication d'une valeur initiale de séquence DMRS prédéterminée correspondant au PDSCH conformément à un protocole de communication ;
(e) l'acquisition par le terminal de communication de la valeur initiale de séquence DMRS correspondant au PDSCH à partir de la station de base via une signalisation RRC ; et
(f) l'acquisition par le terminal de communication de la valeur initiale de séquence DMRS correspondant au PDSCH depuis la station de base via une signalisation de canal de commande de couche physique.

4. Procédé selon la revendication 1, dans lequel l'étape (S110) comprend au moins l'une des suivantes :
(g) l'acquisition par le terminal de communication d'un paramètre correspondant à une valeur initiale de séquence DMRS prédéterminée correspondant au E-PDCCH conformément à un protocole de communication ;
(h) l'acquisition par le terminal de communication du paramètre correspondant à la valeur initiale de séquence DMRS correspondant au E-PDCCH depuis une station de base via une signalisation RRC ; et
(i) l'acquisition par le terminal de communication du paramètre correspondant à la valeur initiale de séquence DMRS correspondant au E-PDCCH depuis la station de base via une signalisation de canal de commande de couche physique.

5. Procédé selon la revendication 1, dans lequel l'étape (S110) comprend au moins l'une des suivantes :
(j) l'acquisition par le terminal de communication d'un paramètre correspondant à une valeur initiale de séquence DMRS prédéterminée correspondant au PDSCH conformément à un protocole de communication ;
(k) l'acquisition par le terminal de communication du paramètre correspondant à la valeur initiale de séquence DMRS correspondant au PDSCH depuis une station de base via une signalisation RRC ; et
(l) l'acquisition par le terminal de communication du paramètre correspondant à la valeur initiale de séquence DMRS correspondant au PDSCH depuis la station de base via une signalisation de canal de commande de couche physique.

6. Procédé de transmission d'une valeur initiale de séquence DMRS de signal de référence de démodulation, comprenant les étapes consistant à :
transmettre par la station de base un paramètre correspondant à la valeur initiale de séquence DMRS correspondant à un canal de commande à liaison descendante physique renforcé E-PDCCH ou la valeur initiale de séquence DMRS correspondant au E-PDCCH à un terminal de communication via une signalisation de commande de ressource radio RRC, ou transmettre par la station de base le paramètre correspondant à la valeur initiale de séquence DMRS correspondant au E-PDCCH ou la valeur initiale de séquence DMRS correspondant au E-PDCCH, au terminal via une signalisation de canal de commande de couche physique, et transmettre le paramètre correspondant à la valeur initiale de séquence DMRS correspondant au PDSCH ou la valeur initiale de séquence DMRS correspondant à un canal partagé à liaison descendante physique PDSCH au terminal via une signalisation RRC ou transmettre le paramètre correspondant à la valeur initiale de séquence DMRS correspondant au PDSCH ou à la valeur initiale de séquence DMRS correspondant au PDSCH, au terminal via une signalisation de canal de commande de couche physique, à un terminal de communication,
dans lequel le paramètre correspondant à la valeur initiale de séquence DMRS correspondant au E-PDCCH est différent du paramètre correspondant à la valeur initiale de séquence DMRS correspondant au PDSCH et la valeur initiale de séquence DMRS correspondant au E-PDCCH est différente de la valeur initiale de séquence DMRS correspondant au PDSCH.

7. Terminal de communication comprenant :
un module d'acquisition (10) configuré pour acquérir un paramètre correspondant à la valeur initiale de séquence DMRS correspondant à un canal de commande à liaison descendante physique renforcé E-PDCCH et générer la valeur initiale de séquence DMRS correspondant au E-PDCCH en utilisant le paramètre correspondant à la valeur initiale de séquence DMRS correspondant au E-PDCCH ; acquérir par le terminal de communication un paramètre correspondant à la valeur initiale de séquence DMRS correspondant à un canal partagé à liaison descendante physique PDSCH et générer la valeur initiale de séquence DMRS correspondant au PDSCH en utilisant le paramètre correspondant à la valeur initiale de séquence DMRS correspondant au PDSCH ; et
un module de génération (20) configuré pour générer une séquence DMRS correspondant au E-PDCCH en utilisant la valeur initiale de séquence DMRS correspondant au E-PDCCH et générer une séquence DMRS correspondant au PDSCH en utilisant la valeur initiale de séquence DMRS correspondant au PDSCH,
dans lequel la valeur initiale de séquence DMRS correspondant au E-PDCCH est différente de la valeur initiale de séquence DMRS correspondant au PDSCH.

8. Terminal de communication selon la revendication 7, dans lequel :
le module d'acquisition (10) acquiert au moins l'une des valeurs suivantes : (a) une valeur initiale de séquence DMRS prédéterminée correspondant au E-PDCCH conformément à un protocole de communication ; (b) la valeur initiale de séquence DMRS correspondant au E-PDCCH depuis une station de base via une signalisation RRC ; et (c) la valeur initiale de séquence DMRS correspondant au E-PDCCH depuis la station de base via une signalisation de canal de commande de couche physique.

9. Terminal de communication selon la revendication 7, dans lequel :
le module d'acquisition (10) acquiert au moins l'une des valeurs suivantes : (d) une valeur initiale de séquence DMRS prédéterminée correspondant au PDSCH conformément à un protocole de communication ; (e) la valeur initiale de séquence DMRS correspondant au PDSCH depuis la station de base via une signalisation RRC; et (f) la valeur initiale de séquence DMRS correspondant au PDSCH depuis la station de base via une signalisation de canal de commande de couche physique.

10. Terminal de communication selon la revendication 7, dans lequel :
le module d'acquisition (10) acquiert au moins l'un des paramètres suivants : (g) un paramètre correspondant à la valeur initiale de séquence DMRS prédéterminée correspondant au E-PDCCH conformément à un protocole de communication ; (h) le paramètre correspondant à la valeur initiale de séquence DMRS correspondant au E-PDCCH depuis la station de base via une signalisation RRC ; et (i) le paramètre correspondant à la valeur initiale de séquence DMRS correspondant au E-PDCCH depuis la station de base via une signalisation de canal de commande de couche physique.

11. Terminal de communication selon la revendication 7, dans lequel :
le module d'acquisition (10) acquiert au moins l'un des paramètres suivants : (j) un paramètre correspondant à une valeur initiale de séquence DMRS prédéterminée correspondant au PDSCH conformément au protocole de communication ; (k) le paramètre correspondant à la valeur initiale de séquence DMRS correspondant au PDSCH depuis la station de base via une signalisation RRC ; et (l) le paramètre correspondant à la valeur initiale de séquence DMRS correspondant au PDSCH depuis la station de base via une signalisation de canal de commande de couche physique.

12. Station de base comprenant :
un module de transmission configuré pour transmettre un paramètre correspondant à la valeur initiale de séquence DMRS correspondant à un canal de commande à liaison descendante physique renforcé E-PDCCH ou la valeur initiale de séquence DMRS correspondant au E-PDCCH à un terminal de communication via une signalisation RRC ou transmettre un paramètre correspondant à la valeur initiale de séquence DMRS correspondant au E-PDCCH ou la valeur initiale de séquence DMRS correspondant au E-PDCCH au terminal via une signalisation de canal de commande de couche physique et transmettre le paramètre correspondant à la valeur initiale de séquence DMRS correspondant au PDSCH ou la valeur initiale de séquence DMRS correspondant à un canal partagé à liaison descendante physique PDSCH au terminal de communication via une signalisation RRC ou transmettre le paramètre correspondant à la valeur initiale de séquence DMRS correspondant au PDSCH ou la valeur initiale de séquence DMRS correspondant au PDSCH au terminal via une signalisation de canal de commande de couche physique, au terminal de communication,
dans lequel le paramètre correspondant à la valeur initiale de séquence DMRS correspondant au E-PDCCH est différent du paramètre correspondant à la valeur initiale de séquence DMRS correspondant au PDSCH et la valeur initiale de séquence DMRS correspondant au E-PDCCH est différente de la valeur initiale de séquence DMRS correspondant au PDSCH.
